(19) **Europäisches Patentamt**
**European Patent Office**
**Office européen des brevets**

(11) **EP 4 675 535 A1**

(12) **EUROPEAN PATENT APPLICATION**

(43) Date of publication:
**07.01.2026 Bulletin 2026/02**

(21) Application number: **24306115.7**

(22) Date of filing: **04.07.2024**

(51) International Patent Classification (IPC):
*G06Q 20/36* (2012.01)

(52) Cooperative Patent Classification (CPC):
**G06Q 20/38215; G06Q 20/0457; G06Q 20/065;
G06Q 20/3678; G06Q 20/3829; H04L 9/0825;
H04L 9/3247**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **THALES DIS FRANCE SAS
92190 Meudon (FR)**

(72) Inventors:
• **FAHER, Mourad
78160 Marly Le Roi (FR)**
• **DEBOIS, Georges
75013 Paris (FR)**
• **DURAND, Stéphane
78140 Vélizy Villacoublay (FR)**

(74) Representative: **Quintero Romero, Manuel
Thales Dis France SAS
Intellectual Property Department
6, rue de la Verrerie
92190 Meudon (FR)**

(54) **ISSUANCE OF A FUNGIBLE TOKEN FOR A CONDITIONAL ACCESS TO A SERVICE**

(57) The invention provides a method of enabling a conditional access to a service delivered by a service provider. The method comprises receiving (209) by an issuer entity, a fungible token request from a user device, the fungible token request comprising a public key of the service provider, a public key of a secure element associated with the user device and requested information to be incorporated in a fungible token. A fungible token is computed (210) based on the requested information comprised in the fungible token request, and encrypted (211) using the public key of the service provider, to obtain a first encrypted fungible token. The first encrypted fungible token is further encrypted using the public key of the secure element to obtain a second encrypted fungible token, which is transmitted (212) to the user device.

**[FIG. 2]**

**Description**

## TECHNICAL FIELD

This invention is related to the field of enabling an access to a service that is conditioned by the provision of trusted information, in particular for user devices having digital wallets accessing to services provided in a communications network by a service provider.

## BACKGROUND OF THE INVENTION

The invention is useful in particular, but not exclusively, in the context of the electronic Identification, Authentication and Trust Services, el DAS 2, regulation. This regulation aims at deploying mobile-based digital wallets for user's identification that is conditional to the access of services provided by service providers.

Conditions to access a service, however, are not restricted to the provision of certified personal attributes to the service provider: some services require to proceed with a payment of a given amount to the service provider.

This leads to the following problems:

- a payment application is to be combined with an identification application to enable users to access to such services;
- a solution based on crypto-currency backed-up by a distributed ledger such as a Blockchain, is not appropriate for real time operations, and would delay the delivery of the service by the service provider;
- the risk of a non-solvable payment (for example multiple payment transactions with no fund) may generate denial of service and may delay overall the delivery of services, for example for certification of personal attributes requesting payment of a given amount;
- such transaction involving a payment is required to ensure privacy of the involved parties.

Therefore, there is a need for enabling a conditional access to a service based on the provision of information (an amount in case of a transaction involving a payment, or personal attributes of a user), that can enhance the trust between the user and the service provider.

The invention aims at improving the situation.

## SUMMARY OF THE INVENTION

The present invention provides a solution for all the aforementioned problems by a method of enabling a conditional access to a service delivered by a service provider according to claim 1, a computer program according to claim 13, an issuer entity according to claim 14, and a secure element according to claim 15. In dependent claims, preferred embodiments of the invention are defined.

In a first inventive aspect, the invention provides a method of enabling a conditional access to a service delivered by a service provider, the method comprising:

- receiving by an issuer entity, a fungible token request from a user device, the fungible token request comprising a public key of the service provider, a public key of a secure element associated with the user device and requested information;
- computing a fungible token based on the requested information comprised in the fungible token request;
- encrypting the fungible token using the public key of the service provider, to obtain a first encrypted fungible token;
- encrypting the first encrypted fungible token using the public key of the secure element to obtain a second encrypted fungible token;
- transmitting the second encrypted fungible token to the user device.

The invention proposes to issue a fungible token carrying information that is requested to access to a service of a service provider, the fungible token being encrypted twice based on public keys of the parties involved in a transaction: the service provider and a secure element associated with the user device. This ensures an anti-cloning protection of the fungible token, which can only be decrypted by the secure element and the service provider, together. This also ensures that the service provider can only receive the fungible token from the secure element which public key has been used to obtain the second encrypted fungible token.

According to some embodiments, the fungible token request may further comprise an order number uniquely identifying a transaction with the service provider, and the computed fungible token may comprise the order number.

Therefore, the fungible token is uniquely bound to a given transaction (order number), to a given secure element and to a given service provider, which ensures protection against replay and relay attacks.

According to some embodiments, the requested information may be an amount of a payment.

Therefore, the invention can be used in the context of charged services. It allows to overcome the drawbacks associated with a solution that would be based on crypto-currency back-up by a blockchain.

According to some other embodiments, the requested information may be at least one personal attribute of a user of the user device.

Therefore, the invention can be used in the context of services that are conditioned by the provision of personal attributes of the user.

According to some embodiments, the public key associated with the service provider may be an ephemeral public key generated by the service provider.

The ephemeral public key of the service provider may be anonymous, as it may not carry any information related to the service provider. It ensures confidentiality of the service provider for the issuer entity, which may not access to the identity of the service provider for which it issues a fungible token.

According to some embodiments, the fungible token may be signed by the issuer entity.

This enables to prove the origin of the fungible token. The service provider, once it receives and decrypts the fungible token, can therefore check that the issuer entity is entitled to certify the requested information, which enhances the level of trust associated with the method according to the invention.

In complement, the fungible token may be according to the JSON data format and the signature of the issuer entity may be a JSON Web Signature, JWS.

This format enables to prove the origin of the fungible token and to minimize and serialize the data that is communicated between the entities involved in the method according to the invention. In particular, the JSON data format is transportable over HTTP and allows Base64 encoding to transport binary data.

According to first and second embodiments, the method may further comprise storing the second encrypted fungible token in a secure non-volatile memory of the user device (second embodiment) or of the secure element (first embodiment).

This enables to let a period of time lapse before using the fungible token and proceeding with the transaction with the service provider. The issuance of the fungible token and its usage may therefore be asynchronous.

According to some embodiments, the method may further comprise:

- decrypting, by the secure element, the second encrypted fungible token using a private key of the secure element, to obtain the first encrypted fungible token;
- transmitting, from the secure element, via the user device, a third encrypted fungible token to the service provider, the third encrypted fungible token being derived from the first encrypted fungible token.

Therefore, by decrypting the second encrypting fungible token, the secure element enables the service provider to decrypt the third encrypted fungible token to obtain the fungible token in clear. This enables for the service provider to ensure that the fungible token comes from the right secure element. The method therefore ensures anti-relay protection and anti-replay protection.

In complement, the third encrypted fungible token may be obtained by encrypting the first encrypted fungible token with a session key, the session key may be obtained by applying a key agreement protocol to an ephemeral private key of the secure element and to a public ephemeral key of the service provider, an ephemeral public key of the secure element associated with the ephemeral private key of the secure element may be transmitted to the service provider with the third encrypted fungible token.

This enables to secure the content of the communication between the user device and the service provider. In addition, the session key is only valid during a given session because the keys used to generate it are ephemeral. This enables to reinforce the anti-replay protection and anti-relay protection.

According to a third embodiment, the method may further comprise:

- storing, in the secure element, a verification reference comprising a Uniform Resource Identifier, URI, and a unique user code, wherein the verification reference indicates an address of a user account on a verification server;
- transmitting the verification reference to the service provider with the third encrypted fungible token.

This enables to ensure, for the service provider, that the fungible token was not stolen and reused by an attacker of an entity colluding with a rogue application on the user device.

Alternatively or in complement, after storage of the second encrypted fungible token, the method may further comprise requesting a consent from the user before decrypting the second encrypted fungible token, the consent being validated upon provision of a PIN code by the user on the user device.

This enables to reach a substantial level of assurance, because the method relies on a first authentication factor (the PIN, something the user knows) and on a second authentication factor (the secure element, something the user has) to allows the decryption of the second encrypted fungible token.

A second aspect of the invention concerns a computer program comprising instructions arranged for implementing the method according to some embodiments of the first aspect, when said instructions are executed by a processor.

A third aspect of the invention concerns an issuer entity comprising a network interface and a processor configured for:

- receiving via the network interface, a fungible token request from a user device, the fungible token request comprising a public key of a service provider, a public key of a secure element associated with the user device and requested information;
- computing a fungible token based on the requested information ;
- encrypting the fungible token using the public key of the service provider, to obtain a first encrypted fungible token;
- encrypting the first encrypted fungible token using the public key of the secure element to obtain a second encrypted fungible token;
- transmitting, via the network interface, the second encrypted fungible token to the user device.

A fourth aspect of the invention concerns a secure element associated with a user device, the secure element comprising a secure non-volatile memory, a calculation unit and an interface for communicating with the user device, wherein:

- receiving, from the user device, a second encrypted fungible token, the second encrypted fungible token being a first encrypted token encrypted with a public key of the secure element, and the first encrypted token being an encrypted token encrypted with a public key of a service provider, wherein the encrypted token comprises information requested by the service provider to condition an access to a service;
- decrypting the encrypted fungible token using a private key of the secure element, to obtain the first encrypted fungible token;
- transmitting a third encrypted fungible token derived from the first encrypted fungible token to the service provider, via the user device.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Fig. 1    shows an environment for implementing a method of enabling a conditional access to a service, according to some embodiments of the invention.

Fig. 2    illustrates the steps of a fungible token issuance phase of a method for enabling a conditional access to a service, according to some embodiments of the invention.

Fig. 3    illustrates the steps of a fungible token control phase of a method of enabling a conditional access to a service, according to some embodiments of the invention.

Fig. 4    illustrates the structure of a fungible token issuer entity, according to some embodiments of the invention.

Fig. 5    illustrates the structure of a secure element associated with a user device, according to some embodiments of the invention.

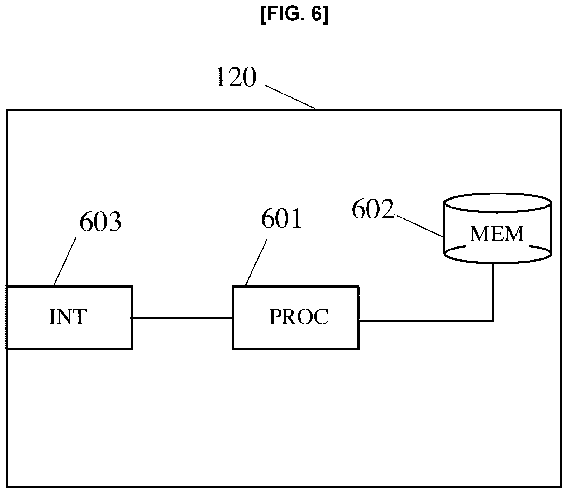

Fig. 6    illustrates the structure of a service provider server, according to some embodiments of the invention.

## DETAILED DESCRIPTION OF THE INVENTION

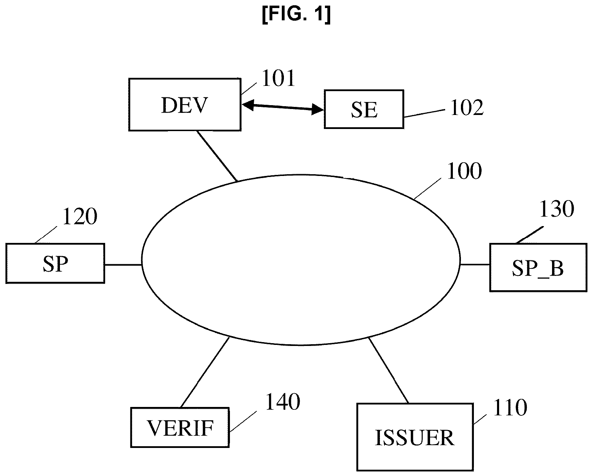

Figure 1 shows an exemplary environment for implementing a method of enabling a conditional access to a service according to some embodiments of the invention.

The environment can be supported by a communications network 100, such as an extended IP network that allows to connect together network entities that are located in different places, that can be remote from each other.

A user device 101 is used by a user to access the network 100, for example via an access network, such as a cellular mobile network or a wifi network.

No restriction is attached to the user device 101, which can be any user device, handheld or not, such as a laptop, a desk computer, a Smartphone, a touch pad, etc.

The user device 101 is also arranged to communicate with a secure element 102. The secure element 102 is arranged for providing computation means (the calculation unit described in what follows) that enable to execute some operations, such as cryptographic operations, as explained in what follows. In addition, the secure element 102 is arranged to store data in a secure and non-volatile memory of the secure element 102.

According to some embodiments, the secure element 102 is external to the device 101, and the secure element 102 and the user device 101 may communicate using a short or medium range wireless communication technology, such as NFC for example (Near Field Communication). Alternatively, the secure element 102 and the user device 101 can communicate together via a wired communication channel. For example, the secure element can be in the format of a card, with an integrated chip, and can be inserted in a card reader communicating with the user device by a communication wire. Alternatively, the card reader in which the secure element 102 is inserted can communicate with the user device 101 via a wireless communication channel. The secure element can be an electronic IDentity Card, also named eID card, as defined in the eI DAS regulation.

Still alternatively, the secure element 102 is hosted in a remote cloud server, and can be accessed by the user device 102 via a secure communication session on the communications network 100.

Still alternatively, the secure element 102 can be natively embedded in the user device 101, in the form of an embedded Secure Element, eSE, with a dedicated secure and non volatile memory. The secure element 102 may also be part of a digital wallet application installed and executed on the user device 101.

The user device 101 comprises a user interface, for interacting with a user, in particular for displaying information to the user on a display of the user device 101, and for receiving user inputs, such as touch inputs on the display, when the display is a touch screen.

In what follows, it is considered, for illustrative purposes only, that the secure element 102 is an eID card that is external to the user device 101.

The environment further comprises a server of a service provider 120. In the context of the invention, the service provider 120 is preferably a Trusted Service Provider, TSP, or a Relying Party.

A Trusted Service Provider is a server associated with qualified certificate authorities, that are maintained in trusted lists that are made publicly available, in the European Union in the context of the eI DAS regulation.

A Relying Party is a server providing access to a service using a secure software application, according to the OpenID authentication system.

According to the invention, the service provider 120, before providing a service, is arranged to request information included in a fungible token from a user device that requests a service. The delivery of the service is then conditioned by the reception of the fungible token, and by a positive check of the validity of the fungible token and of the information carried by the fungible token. According to some embodiments, the fungible token may be a financial token issued by a bank of the user, which allows a financial settlement of a given amount to a bank 130 of the service provider 120, the financial settlement being conditional to the service delivery. The service provider 120 can for example be associated with a private or public authority, and the service may consist in providing an attestation certifying attributes of the user, to be stored in the digital wallet of the user device 101, in exchange of the financial settlement of a given amount. Such a service can for example comply with the Qualified Electronic Attestation of Attributes, QEAA, process, defined in the EUDI wallet ecosystem.

According to some alternative embodiments, the fungible token carries personal attributes of the user, in the case where the service provider 120 executes a conditional check of the personal attributes, before providing the service to the user device 101.

According to the invention, the environment further comprises a fungible token issuer entity 110, referred to as issuer entity 110 in what follows.

The issuer entity 110 may be a server or terminal associated with an authority entitled to deliver a fungible token, such as the financial fungible token or the fungible token carrying personal attributes of the user. For example, the issuer entity 110 may be a server of a bank of the user, entitled to deliver a financial fungible token to proceed with a financial settlement with the service provider 120, as detailed in what follows.

In an embodiment (named third embodiment in what follows), the environment may further comprise a verification server 140. The verification server 140 may store personal attributes of the user, and/or identity information related to the user device 101, to the digital wallet installed on the user device 101 and/or to the secure element 102. For example, identity information related to the digital wallet or secure element 102 may be an IMSI (International Mobile Subscriber Identity) or MSISDN (Mobile Station International Subscriber Directory Number).

The personal attributes and/or identity information are pre-stored in the verification server 140. The verification server 140 provides a secure access to personal attributes or identity information, to third parties, to which a URI is communicated by the user. This allows to prove the origin of information communicated to the service provider.

To this end, the verification server 140 communicates, in advance, a unique identifier or code, to the user, and the URI, which may be stored in a secure non-volatile memory, for example in the secure element 102. The URI may be a URI generally related to the verification server 140 and the code identifies the user's profile in the verification server 140: therefore, the general URI and the code can be concatenated to obtain a unique URI giving access to the user's profile in the verification server 140.

The unique URI (after concatenation with the unique code) may be, for example:

https://www.myverif.com/check-fgt.php?eid=code

The user's unique ode can be renewed on a regular basis (at a given frequency), for non-traceability purposes.

The unique URI described above can be stored in the secure element 102.

When communicating the unique URI to a service provider, such as the service provider 120 described above, an order number (described in what follows) can be appended to the unique URI, to obtain a concatenated URI noted CVR in what follows. The order number can be used to validate a transaction (financial settlement) with the user, as the verification server 140 may request an acknowledgment from the user, before validating the settlement with the service provider 120.

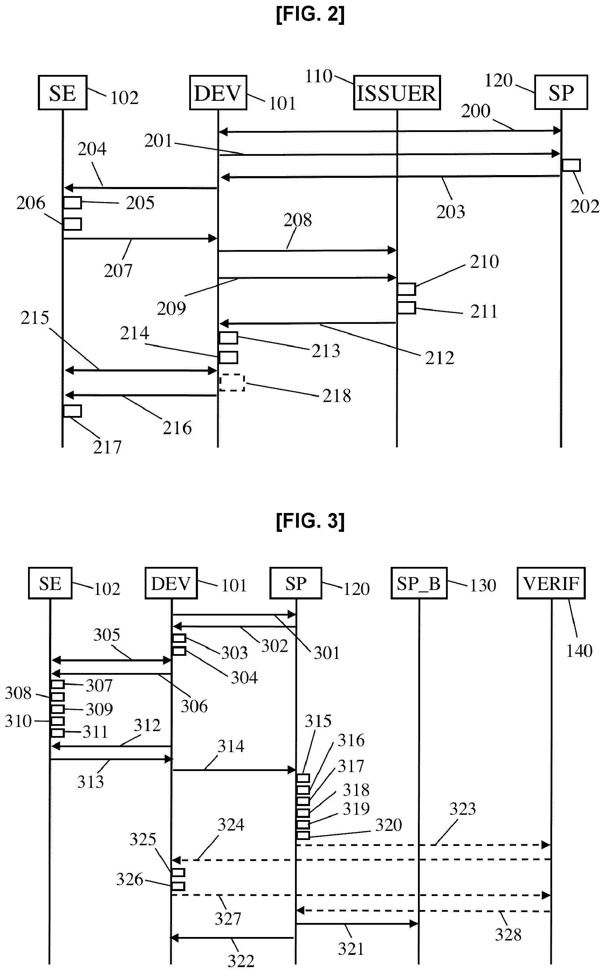

**Figure 2** shows the steps of a fungible token issuance phase of a method for enabling a conditional access to a service, according to some embodiments of the invention.

The issuance phase can be implemented by the secure element 102, the user device 101, the issuer entity 110 and the service provider 120, described with reference to figure 1. In embodiments in which the fungible token carries personal attributes (and not financial data such as an amount), then the server 130 does not participate to the fungible token issuance phase.

As explained above, it is considered, for illustrative purposes only, that the secure element 102 is an eID card that is external to the user device 101.

Before the start of the token issuance phase, the eID card 102 contains:

- a static key pair, comprising a card static public key, noted Card_StaticPubK, associated with a certificate noted Card_Certif, and a card static private key, noted Card_StaticPrivK;
- a file, or a container, for example a file or data object as defined in the standard specification ISO/IEC 7816-4:2020 for Identification Cards, dedicated to host fungible tokens.

Also, before starting of the token issuance phase, the service provider 120 stores a static key pair comprising an SP public key SP_StaticPubK, associated with a certificate, noted SP_StaticCertif, and an SP private key SP_StaticPrivK.

At a step 200, a communication session is generated on the network 200 between the user device 101 and the service provider 120. No restriction is attached to the communication session, which is preferably a secure session, for example according to a Transport Layer Security, TLS, protocol. The communication session can be initiated by the user of the device 101, to obtain a service from the service provider 120, via an internet browser running on the user device 101 for example.

At a step 201, the user device 101 sends a first request, requesting a service that is provided by the service provider 120. As explained above, the delivery of the service by the service provider 120 is conditioned by the reception of a valid fungible token comprising requested information, as explained in what follows. The first request sent by the user device 101 requests a public key from the service provider 120, and an order number, which is preferably unique.

Upon reception of the first request at step 201, the service provider 120 may generate an ephemeral key pair, comprising an SP ephemeral public key SP_EPubK and an SP ephemeral private key SP_EPrivK. In addition, the service provider 120 may generate an order number, uniquely associated with the provision of the service to the user. The order number may be associated with user reference data, such as:

- MSISDN of the secure element 102 or of the user device 101;
- address and shipment details for service/good delivery;
- mailbox;
- user personal attributes;
- account number of the user with the service provider; and/or
- any other data related to the user or their devices.

The user reference data can be indicated in the first request, or obtained during step 200, or may be stored in advance by the service provider 120 (for example when the user is already associated with an account number).

Preferably, the user reference data is unambiguous, i.e. contains data that is consistent and that uniquely identify the user.

In the third embodiment in which the verification server 140 is involved (described in what follows), the user reference data may not be complete. Additional steps are comprised in the third embodiment to ensure that the delivery of the service is requested by the right user, as it is explained referring to figure 3 described hereafter.

The service provider 120 stores the order number in association with the user reference data and in association with the SP ephemeral key pair.

At a step 203, the service provider 120 sends a fungible token acquisition request to the user device 101, because acquisition then provision of the fungible token to the service provider is conditional to the delivery of the service. The fungible token acquisition request comprises:

- the SP ephemeral public key SP_EPubK ;
- the public certificate SP_StaticCertif;
- the order number;
- requested information that is to be certified with the fungible token to access to the service provided by the service provider 120. According to some embodiments, the fungible token is a financial fungible token and the requested information is financial information such as an amount of the settlement. According to alternative embodiments, the requested information to be included in the fungible token comprises one or several personal attributes of the user;
- a signature of the order number and of the SP ephemeral public key SP_EPubK. The signature may be based on the SP static private key SP_StaticPrivK.

Upon reception of the fungible token acquisition request by the device 101, the fungible token acquisition request is transmitted to the secure element 102 at a step 204, which is an eID card in the considered example. As explained above, the secure element 102 may be an eSE or may be part of the digital wallet application installed on the user device 101.

At a step 205; the secure element 102 checks the order number and the SP ephemeral public key SP_EPubK, by verifying the signature in the fungible token acquisition request, using the SP static public key SP_StaticPubK associated with the static certificate SP_StaticCertif. The static certificate SP_StaticCertif can be checked using the root public key of a certification authority.

In case of a positive check at step 205, the secure element 102 stores the SP ephemeral public key SP_EPubK at a step 206, in a non-volatile memory of the secure element 102n in association with the order number. Else, the fungible token provision request is refused by sending a refusal to the service provider 120.

At a step 207, after storage of the SP ephemeral public key SP_EPubK at step 206, the secure element 102 may confirm to the user device 101 that the order number and the SP ephemeral public key SP_EPubK are validly checked, and that a fungible token can be requested to the issuer entity 120.

At a step 208, the user device 101 establishes a communication session with the issuer entity 110. The establishment of the communication session with the issuer entity 110 may comprise an authentication of the user, which may be associated with a user's account in the issuer entity 110. As previously explained, the issuer entity 110 may be a server of a bank of the user, in the embodiments in which the fungible token is a financial fungible token. The authentication of the user may comprise the provision of a login and a password by the user.

At a step 209, the user device 101 transmits a fungible token request to the issuer entity 110, the fungible token request comprising:

- the SP ephemeral public key SP_EPubK;
- the order number;
- the requested information that is to certified with the fungible token, which can be a transaction amount in the embodiments in which the fungible token is a financial fungible token; and
- the card static public key Card_StaticPubK of the secure element 102, and the associated card public certificate Card_Certif.

At a step 210, following the reception of the fungible token request, the issuer entity 110 computes a fungible token comprising:

- fungible token claims, which may comprise information regarding the user and/or the issuer entity;
- information corresponding to the requested information. This information can be a transaction amount or personal attributes of the user, as previously explained;
- the order number;
- a signature of the fungible token, by the issuer entity 110.

No restriction is attached to the format of the fungible token, which may be a Java Script Object Notation, JSON, data structure for example. In that case, the signature by the issuer entity 110 may be a JSON Web Signature, JWS, according to the Request for Comments, RFC 7515 of the Internet Engineering Task Force, IETF, dated May 2015.

At a step 211, the issuer entity 110 encrypts the fungible token to obtain an encrypted fungible token. Preferably, the fungible token is enciphered twice, in the following manner:

- the fungible token can be enciphered using the SP ephemeral public key SP_EPubK, to obtain a first encrypted fungible token;
- the first encrypted fungible token and the information that is certified by the fungible token (for example the transaction amount) are enciphered using the card static public key Card_StaticPubK of the secure element 102, to obtain a second encrypted fungible token, which is noted FGT.

Therefore, at step 211, the issuer entity 110 obtains the following second encrypted fungible token FGT:

$$FGT=ENC(ENC(FungibleToken)_{SP\_EPubK}+information)_{Card\_StaticPubK}$$

where ENC(X)Y indicates X that is encrypted based on key Y;
FungibleToken is the fungible token obtained at step 210;
information is the information corresponding to the requested information.

At a step 212, the issuer entity 110 transmits the second encrypted fungible token FGT to the user device 101, via the previously established communication session.

At a step 213, the user device 101 may request a first authorization from the user to store the encrypted fungible token in the secure element 102. The first authorization request may consist in displaying a window on a graphical user interface of the user device 101, with a message such that "do you confirm", and a "yes" and "no" button.

At a step 214, the user may authorize the storage of the second encrypted fungible token. Such an authorization may comprise pressing the displayed "yes" button and/or providing a user PIN, the user PIN being associated with the user device 101. If the user refuses, then the storage of encrypted fungible token is interrupted and the fungible token acquisition request of the service provider 120 is refused.

At a step 215, provided that the user has confirmed the authorization at step 214, the user device 101 may establish a secure communication channel with the secure element 102. For example, when the user provides the user PIN at step 214, the secure channel may be a Password Authenticated Connection Establishment, PACE, PIN secure channel.

At a step 216, after the secure communication channel is established with the secure element 102, the user device 101 transmits the second encrypted fungible token FGT to the secure element 102 for secure storage.

At a step 217, the secure element 102 stores the received second encrypted fungible token FGT in a secure non-volatile memory of the secure element 102, in association with the order number.

Steps 214 to 217 correspond to a first embodiment of the invention. Alternatively, according to a second embodiment, the second encrypted fungible token FGT is stored in a non-volatile memory of the device 101. Therefore, steps 214 to 217 are replaced by a step 218, which consists in storing the second encrypted fungible token FGT in a non-volatile memory of the user device 101, in association with the order number.

Figure 3 shows the steps of a fungible token control phase of a method of enabling a conditional access to a service, according to some embodiments of the invention.

The fungible token control phase takes place after the fungible token issuance phase described with reference to figure 2. It can be triggered immediately after the fungible token issuance phase, or after a given lapse of time, in which case the user can trigger the fungible token control phase when they want to access to the service provided by the service provider 120.

At a step 301, the user device 101 sends a transaction request to the service provider 120, indicating the order number previously used to obtain the second encrypted fungible token FGT. In return, at a step 302, the service provider sends a fungible token provision request.

At a step 303, the user device 102 may request a second authorization from the user to accept the fungible token provision request (therefore to accept to transmit the fungible token previously obtained and stored in association with the order number, to the service provider 120).

The second authorization request may consist in displaying a window on a graphical user interface of the user device 101, with a message such that "do you confirm", and a "yes" and "no" button.

At a step 304, the user may authorize the provision of the fungible token to the service provider 120. Such an authorization may comprise pressing the displayed "yes" button and/or providing the user PIN (the same as the one described when referring to step 214). If the user refuses, the fungible token provision request of the service provider 120 is refused.

At a step 305, provided that the user has confirmed the second authorization at step 304, the user device 101 may establish a secure communication channel with the secure element 102. For example, when the user provides the user PIN at step 304, the secure channel may be a Password Authenticated Connection Establishment, PACE, PIN secure channel.

At a step 306, the user device 101 transmits a request to decrypt the second encrypted fungible token previously stored. In the first embodiment described above, the second encrypted fungible token is stored in the secure element 102 in association with the order number: in that case, the request to decrypt the second encrypted fungible token indicates the order number for which decryption of the second encrypted fungible token is requested. In the second embodiment described above, the second encrypted fungible token is stored in the user device 101 in association with the order number: in that case, the request to decrypt the second encrypted fungible token comprises the order number and the second encrypted fungible token (retrieved from the non-volatile memory of the user device 101).

At a step 307, the secure element 102 decrypts the second encrypted fungible token based on the card static private key Card_StaticPrivK, to obtain the first encrypted fungible token previously described.

At a step 308, according to the first and second embodiment, the secure element 102 may concatenate the first encrypted fungible token with the order number, noted ORD in what follows. According to a third embodiment, the secure element 102 concatenates, at step 308, the first encrypted fungible token with a concatenation CVR of the unique URI and of the order number, as previously described.

At a step 309, the secure element 102 generates a card ephemeral key pair, comprising a card ephemeral public key Card_EPubk and a card ephemeral private key Card_EPrivK.

At a step 310, the secure element 102 computes a session key SSK by applying a key agreement protocol to the SP ephemeral public key SP_EPubK and to the card ephemeral private key Card_EPrivK. The key agreement protocol may be predetermined, or may be agreed upon with the service provider 120. According to the key agreement protocol, the service provider 120 can compute the same session key SSK by applying the key agreement protocol to the SP ephemeral private key SP_EPrivK and to the card ephemeral public key CardEPubK.

At a step 311, according to the first and second embodiments, the secure element 102 encrypts the concatenation of the first encrypted fungible token and of the order number ORD, computed at step 308, based on the session key SSK. Therefore, the following third encrypted fungible token is obtained:

$$\mathrm{ENC}(\mathrm{ENC}(\mathrm{FungibleToken})_{\mathrm{SP\_EPubK}} // \mathrm{ORD})_{\mathrm{SSK}}$$

in which // indicates a concatenation operation.

In the third embodiment, the secure element 102 encrypts, at step 311, the concatenation of the first encrypted fungible token and of the concatenation CVR, computed at step 308, based on the session key SSK, to obtain the third encrypted fungible token. Therefore, in the third embodiment, the third encrypted fungible token is:

$$\mathrm{ENC}(\mathrm{ENC}(\mathrm{FungibleToken})_{\mathrm{SP\_EPubK}} // \mathrm{CVR})_{\mathrm{SSK}}$$

At a step 312, the user device 101 may send a request to read the third encrypted fungible token.

In response to step 312, the secure element 102 transmits, at a step 313, a response to the fungible token provision request sent at step 302 by the service provider 120, the response comprising:

- the third encrypted fungible token to the user device 101 at a step 313;
- the card ephemeral public key Card_EPubK; and
- the order number.

At a step 314, the user device 101 forwards the response to the service provider 120.

At a step 315, the service provider 120 obtains the order number from the response, and retrieves the SP ephemeral key pair stored in association with the order number.

At a step 316, the service provider 120 computes the session key SSK, by applying the key agreement protocol to the card ephemeral public key Card_EPubK (comprised in the response received at step 314) and to the SP ephemeral private key SP_EPrivK retrieved at step 315.

At a step 317, the service provider 120 decrypts the third encrypted fungible token to obtain the first encrypted fungible token and the order number based on the computed session key SSK, in the first and second embodiment. At step 317, according to the third embodiment, the service provider 120 decrypts the third encrypted fungible token to obtain the first encrypted fungible token and the concatenation CVR of the unique URI and of the order number.

At step 318, the service provider 120 decrypts the first encrypted fungible token (which is encrypted using the SP ephemeral public key) based on the SP ephemeral private key SP_EPrivK, to obtain the fungible token.

At a step 319, the service provider 120 checks that the order number obtained at step 317, the order number comprised in the fungible token obtained at step 318, and the order number received in the response at step 314, are identical. If not, the service is not delivered to the user device 101. Else, the method goes on with step 320.

At step 320, the service provider 120 checks the signature of the fungible token and checks that the information certified by in the fungible token corresponds to the expected information (to the requested amount or to the requested personal attribute, or personal attributes, indicated in the fungible token acquisition request sent at step 203). In case of positive verifications at step 320, the method goes to step 321, or to step 322, in the first and second embodiments, and to step 323 in the third embodiment. Else, in case of at least one negative verification, the service is not delivered to the user device 101.

At step 321, the service provider 120 proceeds with a payment settlement of the amount by communicating the user reference data and the amount to the bank 130 of the service provider, in the embodiments in which the fungible token is a financial fungible token indicating the amount.

In the embodiments in which the fungible token carries personal attributes of the user, step 321 is not performed, and the method goes directly to step 322.

At step 322, the service is delivered to the user device 101.

As explained above, in the third embodiment, the method goes to step 323 after step 320. It is to be noted that the third embodiment is identical to the first embodiment during the fungible token issuance phase, but differs during the fungible token control phase, as it further comprises steps 223 to 228.

At step 323, the service provider 120 connects to the verification server 140 using the concatenation CVR, to request verification of the user.

Upon reception of the verification request, which identifies the user account using the unique code, the verification server 140 sends a notification at a step 324 to the user device 101, for example via the digital wallet application stored and executed on the user device 101.

At a step 325, the user device 101 requests an acknowledgment from the user. The acknowledgment request may consist in displaying a window indicating a message such as "do you confirm?" with a "Yes" button and a "No" button for example.

At a step 326, the user confirms or refuses the acknowledgment on the user device 101.

At a step 327, the confirmed or refused acknowledgment is transmitted from the user device 101 to the verification server 140.

At a step 328, the confirmed or refused acknowledgment is transmitted from the verification server 140 to the service provider 120.

If the acknowledgment is refused, the service provider 120 does not deliver the service. Else, if the acknowledgment is accepted, the service provider 120 delivers the service at step 322 (or settles the payment at step 321, then delivers the service at step 322).

Therefore, the invention allows to improve the trust between the service provider 120 and the user requesting an access to a service. Indeed, it provides a secure provision of a fungible token based on which the service provider 120 can decide to deliver the service.

The different steps mentioned above for the three embodiments enable to ensure protection against the following threats:

- the secure element 102, when external to the device 101, is stolen: in the second embodiment, the second encrypted fungible token is not stored in the secure element 102, so that this theft does not raise any security issue. In the first and third embodiments, the second encrypted fungible token is stored on the secure element 102, but it cannot be decrypted and used without the consent from the user that is requested at step 304 (the second encrypted fungible token is decrypted only if the user enters a valid PIN at step 304);
- the first encrypted fungible token, when decrypted by the secure element 102 from the second encrypted fungible token, is sneakily shared by the digital wallet on the user device 101 to an attacker or to another wallet: the order number context reference stored in the service provider 120 comprises unambiguous information about the legitimate user in the first and second embodiments, which provides an anti-relay attack protection. In the third embodiment, the verification server 140 requests acknowledgment from the user. In addition, an attacker cannot divert the transaction to another service provider 120;
- the second encrypted fungible token is diverted from the legitimate owner during the fungible token issuance phase (before it is stored in the device 101 or in the secure element 102): the second encrypted fungible token is encrypted at step 211 with the card static public key Card_StaticPubK, which is unique and is certified, and using a unique order number, thereby ensuring an anti-cloning protection during issuance of the second encrypted fungible token. The fungible token is unique and can only be used by the secure element 102;
- loss of unused stored second encrypted fungible tokens: even when the user loses their PIN and cannot establish the secure connection with the secure element 102 at steps 304 and 305, the secure element 102, which can be an eID

card, can be accessed with a Personal Unlocking Key, PUK, and the second encrypted fungible token can be recovered (as long as its validity period is not over);

- the issuer entity 110 discovers the identity of the service provider 120: the second encrypted fungible token is encrypted with an anonymous key, i.e. the SP ephemeral public key SP_EPubK, which does not disclose data regarding the service provider 120;

- tentative replay of the fungible token: the fungible token, by being encrypted twice, is bound to the secure element 102, to the service provider 120 and to a given transaction purpose, through respectively the card static public key Card_StaticPubK, the SP ephemeral public key SP_EPubK and the order number. The issuer entity 120 is ensured that the fungible token can only be used by the secure element 102 for a given transaction.

In addition, confidentiality may be ensured by using a TLS protocol session (for example https or wss) between the device 101 and the service provider 120. Untraceability is ensured because no third party controls the exchanges between the secure element 102 and the service provider 120, and because the content of the fungible token is neutral (anonymous) in the embodiments in which it carries financial information such as the amount of the payment. Exchange of data can also be minimized: for example, if the fungible token is according to the JWT format, the fungible token claims can be reduced to the minimum (only the ones that are used according to the invention).

An overall enhanced trust is therefore ensured, as the payment settlement (in the case of a service involving conditioned by a payment) is guaranteed to the service provider 120, which is ensured that the fungible token is redeemable.

Also, the method according to the invention is user-friendly as no complex user procedure is required.

The secure element 102, when external to the device 101, is used as a second authentication factor (something you have), in combination with the PIN requested at steps 304 and 214 (something you know), which allows to reach at least a Level of Assurance, LoA, that is substantial.

To sum up, the method according to the invention allows for a fungible token-based transaction, with privacy protection, anti-cloning protection, anti-replay and anti-relay attack protection, with an overall enhanced trust, user friendly operations and with the secure element serving as second authentication factor.

According to some embodiments, the wallet/device 101 acts as a proxy only, and may be considered as dubious by default.

In addition, the invention avoids the need to relay on blockchain for the management of tokens, which allows real time provisioning of a fungible token to a service provider 120.

In the first and third embodiments, the second encrypted fungible token is stored in the secure element, so if the user device 101 is decommissioned or renewed, the second encrypted fungible token remains safely stored.

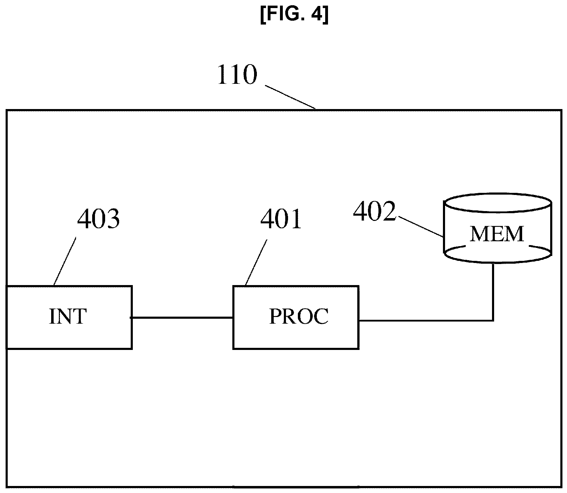

Figure 4 shows the structure of an issuer entity 110 according to some embodiments of the invention.

The issuer entity 130 comprises a processor 401 and a memory 402.

The processor 401 may comprise one or multiple microprocessors, a Central Processing Unit (CPU), on a single Integrated Circuit (IC) or several IC chips.

No restriction is attached to the memory 402, which may be any non-transient, tangible form of memory. For example, it can comprise ROM, RAM, EEPROM and/or flash memory. The processor 401 may be programmable and may be configured to execute instructions that are stored in its internal memory or to execute instructions that are stored in the memory 402.

The memory 402 can store instructions for implementing the steps 209 to 212 described above.

The issuer entity 110 further comprises a network interface 403 configured to access the communication network 100, to communicate with the other entities of the system illustrated on figure 1.

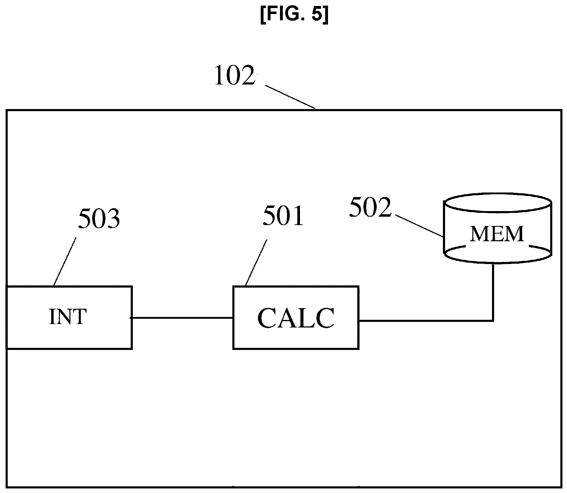

Figure 5 shows the structure of a secure element 102 according to some embodiments of the invention.

As previously explained, the secure element 102 can be a hardware entity external to the user device 101, can be embedded in the user device 101, can be part of the digital wallet application, or can be part of a remote cloud server.

The secure element comprises a calculation unit 501 and a memory 502.

The calculation unit 501 is any unit that is arranged to perform cryptographic operations, and that is arranged to execute write and read operations in the memory 502. In some embodiments, the calculation unit 501 may comprise one or multiple microprocessors, a Central Processing Unit (CPU), on a single Integrated Circuit (IC) or several IC chips.

No restriction is attached to the memory 502, which is preferably a secure, non volatile tangible form of memory, in particular in the first and third embodiments, in which the memory 502 stores the second encrypted fungible token. The calculation unit 501 may be programmable and may be configured to execute instructions that are stored in its internal memory or to execute instructions that are stored in the memory 502.

The memory 502 can store instructions for implementing the steps 204 to 207, 216, 217, and 306 to 311 and 313 described above.

The secure element 102 further comprises an interface 503 configured to communicate with the user device 101. As explained above, the interface 503 can be:

- a wireless interface, such as an NFC interface, in the embodiments in which the secure element 102 is external to the user device 101;
- an interface that is internal to the user device 101, in the embodiments in which the secure element 102 is embedded in the device 101 or is part of the digital wallet application;
- a network interface for accessing the user device 101 via the communications network 100, in the embodiments in which the secure element 102 is part of a cloud server.

Figure 4 shows the structure of a service provider 120 according to some embodiments of the invention.

As explained above, "service provider 120" actually refers to a terminal or server associated with the service provider 120. The service provider 120 comprises a processor 601 and a memory 602.

The processor 601 may comprise one or multiple microprocessors, a Central Processing Unit (CPU), on a single Integrated Circuit (IC) or several IC chips.

No restriction is attached to the memory 602, which may be any non-transient, tangible form of memory. For example, it can comprise ROM, RAM, EEPROM and/or flash memory. The processor 601 may be programmable and may be configured to execute instructions that are stored in its internal memory or to execute instructions that are stored in the memory 602.

The memory 602 can store instructions for implementing the steps 201 to 203, 301, 302, 314 to 322, and (according to the third embodiment) steps 323 and 328 described above.

The service provider 120 further comprises a network interface 603 configured to access the communication network 100, to communicate with the other entities of the system illustrated on figure 1.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of enabling a conditional access to a service delivered by a service provider (120), the method comprising:

   - receiving (209) by an issuer entity (110), a fungible token request from a user device (101), the fungible token request comprising a public key of the service provider, a public key of a secure element (102) associated with the user device and requested information;
   - computing (210) a fungible token based on the requested information comprised in the fungible token request;
   - encrypting (211) the fungible token using the public key of the service provider, to obtain a first encrypted fungible token and encrypting the first encrypted fungible token using the public key of the secure element to obtain a second encrypted fungible token;
   - transmitting (212) the second encrypted fungible token to the user device.

2. The method according to claim 1, wherein the fungible token request further comprises an order number uniquely identifying a transaction with the service provider (120), and wherein the computed fungible token comprises the order number.

3. The method according to claim 1 or 2, wherein the requested information is an amount of a payment.

4. The method according to claim 1 or 2, wherein the requested information is at least one personal attribute of a user of the user device (101).

5. The method according to one of the preceding claims, wherein the public key associated with the service provider (120) is an ephemeral public key generated by the service provider.

6. The method according to one of the preceding claims, wherein the fungible token is signed by the issuer entity (110).

7. The method according to claim 6, wherein the fungible token is according to the JSON data format and the signature of the issuer entity (110) is a JSON Web Signature, JWS.

8. The method according to the preceding claims, further comprising storing (217; 218) the second encrypted fungible token in a secure non-volatile memory (502) of the user device (101) or of the secure element (102).

9. The method according to one of the preceding claims, further comprising:

   - decrypting (307), by the secure element (102), the second encrypted fungible token using a private key of the secure element, to obtain the first encrypted fungible token;
   - transmitting (313; 314), from the secure element, via the user device (101), a third encrypted fungible token to the service provider, the third encrypted fungible token being derived from the first encrypted fungible token.

10. The method according to claim 9, wherein the third encrypted fungible token is obtained by encrypting (311) the first encrypted fungible token with a session key, wherein the session key is obtained (310) by applying a key agreement protocol to an ephemeral private key of the secure element (102) and to a public ephemeral key of the service provider (120), wherein an ephemeral public key of the secure element associated with the ephemeral private key of the secure element is transmitted to the service provider with the first or third encrypted fungible token.

11. The method according to claim 9 or 10, further comprising:

    - storing, in the secure element (102), a verification reference comprising a Uniform Resource Identifier, URI, and a unique user code, wherein the verification reference indicates an address of a user account on a verification server (140);
    - transmitting (313) the verification reference to the service provider (120) with the third encrypted fungible token.

12. The method according to claim 8 and to one of claims 9 to 11, wherein after storage (217; 218) of the second encrypted fungible token, the method further comprises requesting (303) a consent from the user before decrypting (307) the second encrypted fungible token, wherein the consent is validated upon provision (304) of a PIN code by the user on the user device (101).

13. A computer program comprising instructions arranged for implementing the method according to one of claims 1 to 7, when said instructions are executed by a processor (401).

14. An issuer entity (110) comprising a network interface (403) and a processor (401) configured for:

    - receiving via the network interface, a fungible token request from a user device (101), the fungible token request comprising a public key of a service provider (120), a public key of a secure element associated with the user device and requested information;
    - computing a fungible token based on the requested information comprised in the fungible token request;
    - encrypting the fungible token using the public key of the service provider, to obtain a first encrypted fungible token;
    - encrypting the first encrypted fungible token using the public key of the secure element to obtain a second encrypted fungible token;
    - transmitting, via the network interface, the second encrypted fungible token to the user device.

15. A secure element (102) associated with a user device (101), the secure element comprising a secure non-volatile memory (502), a calculation unit (501) and an interface (503) for communicating with the user device, wherein:

    - receiving, from the user device, a second encrypted fungible token, the second encrypted fungible token being a first encrypted token encrypted with a public key of the secure element, and the first encrypted token being an encrypted token encrypted with a public key of a service provider (120), wherein the encrypted token comprises information requested by the service provider to condition an access to a service;
    - decrypting the encrypted fungible token using a private key of the secure element, to obtain the first encrypted fungible token;
    - transmitting a first encrypted fungible token derived from the first encrypted fungible token to the service provider, via the user device.

[FIG. 1]

EP 4 675 535 A1

[FIG. 2]

[FIG. 3]

[FIG. 5]

102

503    501    502    MEM

INT    CALC

[FIG. 6]

## EUROPEAN SEARCH REPORT

Europäisches
Patentamt
European
Patent Office
Office européen
des brevets

**Application Number**

EP 24 30 6115

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/307231 A1 (DUTTA SANTANU [US] ET AL) 11 December 2008 (2008-12-11) * abstract; figures * * paragraphs [0015], [0030] - [0071] * | 1-15 | INV. G06Q20/36 |
| A | US 2015/081567 A1 (BOYLE CLIFFORD F [US] ET AL) 19 March 2015 (2015-03-19) * abstract; figures * * paragraphs [0049] - [0086] * | 1-15 | |
| A | US 2005/209972 A1 (BJORKENGREN ULF [SE] ET AL) 22 September 2005 (2005-09-22) * abstract; figures * * paragraphs [0017] - [0020], [0031] - [0035] * | 1-15 | |
| A | US 2019/373137 A1 (KRUKAR RICHARD H [US] ET AL) 5 December 2019 (2019-12-05) * abstract; figures * | 1-15 | |
| A | WO 99/03079 A1 (ERICSSON GE MOBILE INC [US]) 21 January 1999 (1999-01-21) * abstract; figures * | 1-15 | TECHNICAL FIELDS SEARCHED (IPC) G06Q |
| A | US 2007/050300 A1 (MATSUYAMA SHINAKO [JP]) 1 March 2007 (2007-03-01) * abstract; figures * * paragraphs [0025] - [0068] * | 1-15 | |
| A | US 2014/074721 A1 (AL-HERZ AHMED IBRAHIM [SA] ET AL) 13 March 2014 (2014-03-13) * abstract; figures * * paragraphs [0094] - [0102] * | 1-15 | |
| A | US 2019/319939 A1 (HAMEL BJORN [US] ET AL) 17 October 2019 (2019-10-17) * abstract; figures * * paragraphs [0158], [0159] * | 1-15 | |

-/--

The present search report has been drawn up for all claims

| Place of search | Date of completion of the search | Examiner |
|---|---|---|
| The Hague | 29 November 2024 | Breugelmans, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

<table>
<tr><td colspan="2">Europäisches Patentamt<br>European Patent Office<br>Office européen des brevets</td><td>**EUROPEAN SEARCH REPORT**</td><td>Application Number<br>**EP 24 30 6115**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SOROCEANU TUDOR ET AL: "On Multiple Encryption for Public-Key Cryptography", CYBERCRAFT, AUCKLAND 0600, NEW ZEALAND, vol. 7, no. 4, 6 October 2023 (2023-10-06), page 49, XP093226446, ISSN: 2410-387X, DOI: 10.3390/cryptography7040049 Retrieved from the Internet: URL:https://www.mdpi.com/2410-387X/7/4/49/pdf> * abstract * ----- | 1-15 | |
| A | US 2021/250355 A1 (GALDO FLORIAN [US] ET AL) 12 August 2021 (2021-08-12) * abstract; figures * * paragraphs [0033] - [0037] * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 29 November 2024 | Breugelmans, Jan |

EPO FORM 1503 03.82 (P04C01)

## ANNEX TO THE EUROPEAN SEARCH REPORT
## ON EUROPEAN PATENT APPLICATION NO.

EP 24 30 6115

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | | Publication date | Patent family member(s) | | Publication date |
|---|---|---|---|---|---|
| US 2008307231 | A1 | 11-12-2008 | AT | E353459 T1 | 15-02-2007 |
| | | | AU | 2002343517 A1 | 26-05-2003 |
| | | | CN | 1585774 A | 23-02-2005 |
| | | | DE | 60218057 T2 | 21-06-2007 |
| | | | EP | 1444242 A2 | 11-08-2004 |
| | | | EP | 1632917 A2 | 08-03-2006 |
| | | | ES | 2278979 T3 | 16-08-2007 |
| | | | JP | 4434738 B2 | 17-03-2010 |
| | | | JP | 2005509231 A | 07-04-2005 |
| | | | KR | 20040053196 A | 23-06-2004 |
| | | | US | 2003093667 A1 | 15-05-2003 |
| | | | US | 2008061137 A1 | 13-03-2008 |
| | | | US | 2008307231 A1 | 11-12-2008 |
| | | | WO | 03042225 A2 | 22-05-2003 |
| US 2015081567 | A1 | 19-03-2015 | US | 2015081566 A1 | 19-03-2015 |
| | | | US | 2015081567 A1 | 19-03-2015 |
| US 2005209972 | A1 | 22-09-2005 | CN | 1934819 A | 21-03-2007 |
| | | | EP | 1769604 A1 | 04-04-2007 |
| | | | ES | 2397844 T3 | 11-03-2013 |
| | | | KR | 20070014133 A | 31-01-2007 |
| | | | US | 2005209972 A1 | 22-09-2005 |
| | | | WO | 2005096541 A1 | 13-10-2005 |
| US 2019373137 | A1 | 05-12-2019 | NONE | | |
| WO 9903079 | A1 | 21-01-1999 | AR | 013643 A1 | 10-01-2001 |
| | | | AU | 751404 B2 | 15-08-2002 |
| | | | BR | 9810579 A | 19-09-2000 |
| | | | DE | 69828971 T2 | 26-01-2006 |
| | | | EP | 0995177 A1 | 26-04-2000 |
| | | | JP | 2001509630 A | 24-07-2001 |
| | | | US | 6311171 B1 | 30-10-2001 |
| | | | WO | 9903079 A1 | 21-01-1999 |
| US 2007050300 | A1 | 01-03-2007 | JP | 2000113085 A | 21-04-2000 |
| | | | US | 6766306 B1 | 20-07-2004 |
| | | | US | 2004098352 A1 | 20-05-2004 |
| | | | US | 2007050300 A1 | 01-03-2007 |
| US 2014074721 | A1 | 13-03-2014 | NONE | | |
| US 2019319939 | A1 | 17-10-2019 | EP | 3777016 A1 | 17-02-2021 |
| | | | US | 2019319939 A1 | 17-10-2019 |
| | | | WO | 2019191214 A1 | 03-10-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 6115

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | Publication date | Patent family member(s) | Publication date |
|---|---|---|---|
| US 2021250355 A1 | 12-08-2021 | US 2021250355 A1<br>WO 2019241047 A1 | 12-08-2021<br>19-12-2019 |

EPO FORM P0459

For more details about this annex : see Official Journal of the European Patent Office, No. 12/82

page 2 of 2

**EP 4 675 535 A1**

**REFERENCES CITED IN THE DESCRIPTION**

**Non-patent literature cited in the description**

- RFC 7515. Internet Engineering Task Force, IETF, May 2015